# EUROPEAN PATENT APPLICATION

(11) **EP 3 413 293 A1**
(43) Date of publication of application: **12.12.2018**
(21) Application number: 17174605.0
(22) Date of filing: 06.06.2017
(51) Int. Cl.: G09G 3/00, G09G 3/34

(54) **A LIGHT SOURCE ARRANGEMENT AND METHOD OF MANUFACTURING A DISPLAY DEVICE**

(71) Applicant: Vestel Elektronik Sanayi ve Ticaret A.S., 45030 Manisa (TR)
(72) Inventor: ÖZAYDIN, Mustafa Çaglar, 45030 Manisa (TR); YALÇIN, Celal, 45030 Manisa (TR)
(74) Representative: Flint, Adam

(57) **Abstract**

A light source arrangement for a display screen is provided. The light source arrangement comprises a plurality of light sources (4) for emitting light. At least one of the light sources (4) is associated with a lens (6). The lens (6) is arranged to receive light emitted by the light source (4) with which it is associated. The lens (6) is a deformable lens (36) and is controllable such that the direction of light output by the lens (36) can be controlled by controlling deformation of the deformable lens (36).

## Description

### Technical Field

The present disclosure relates to a light source arrangement and a method of manufacturing a display device.

### Background

Display devices are used in a large variety of contexts for displaying various forms of content. The quality of an image displayed by a display device can depend on a large number of factors. One problem that persists in many known display devices is the problem of a non-uniform distribution of light being used to generate the displayed image. This problem may manifest, for example, as hot spots (i.e. bright regions), dark corners and/or light leakages at the edge of the display device. Issues such as these can have a negative effect on the quality of the image that is displayed at the display device.

### Summary

According to a first aspect disclosed herein, there is provided a light source arrangement for a display screen, the arrangement comprising: a plurality of light sources for emitting light; at least one of the light sources being associated with a lens, the lens being arranged to receive light emitted by the light source with which it is associated; the lens being a deformable lens, the deformable lens being controllable such that the direction of the light output by the lens can be controlled by controlling deformation of the deformable lens.

In an example, the light source arrangement comprises an electrode associated with the lens, the electrode being operable to control the deformation of the deformable lens.

In an example, the light source arrangement comprises a controller, the controller being operable to control a voltage that is applied to the at least one electrode to control the deformation of the deformable lens.

In an example, the deformable lens comprises a liquid for refracting the light emitted by the light source with which it is associated. In an example the liquid comprises an electrolyte solution.

In an example, plural light sources are associated with respective deformable lenses.

In an example, each light source comprises a light-emitting diode LED.

In an example, the lens is associated with plural electrodes.

There may also be provided a display device comprising: a screen, the screen comprising a plurality of individually controllable elements for generating an image, each element being selectively operable to allow light to pass through it and to block light passing through it; and a backlight unit for illuminating the plurality of individually controllable elements, the backlight unit comprising a light source arrangement as described above.

In an example, the display device is a liquid crystal display LCD device, and each of the individually controllable elements comprise a liquid crystal cell.

According to a second aspect disclosed herein, there is provided a method of manufacturing a display device, the method comprising: installing a plurality of light sources in the display device, at least some of the light sources being associated with a respective deformable lens; causing the plurality of light sources to emit light; measuring a uniformity of light output by the display device; and based on the measured uniformity, controlling a deformation of one or more of the deformable lenses to improve the uniformity of light output by the display device, wherein the deformation allows the direction of light output by the one or more deformable lenses to be controlled.

In an example, the method comprises, after controlling the deformation of the one or more deformable lenses, measuring the subsequent uniformity of light that is output by the display device and determining whether the subsequent uniformity is within a desired range of uniformity.

In an example, each deformable lens is associated with one or more respective electrodes and controlling the deformation of the one or more deformable lenses comprises controlling a voltage that is applied to the one or more respective electrodes.

In an example, each deformable lens comprises a liquid for refracting the light emitted by the light source with which it is associated.

In an example, the method comprises receiving a user input at a user interface, and controlling the deformation of the one or more deformable lenses based on the received user input.

### Brief Description of the Drawings

To assist understanding of the present disclosure and to show how embodiments may be put into effect, reference is made by way of example to the accompanying drawings in which:
Figure 1 shows schematically the components of a known display device;
Figure 2 shows schematically a display device with a non-uniform light output;
Figure 3 shows schematically a light source-lens system with a deformable lens;
Figures 4a and 4b show schematically rear and longitudinal cross-sectional views of a display device;
Figure 5a shows schematically an arrangement of light sources in a backlight unit;
Figure 5b shows schematically a 2-dimensional measurement of the intensity of light output by a display device that employs the backlight unit of Figure 5a;
Figure 6a shows schematically an arrangement of light sources in a backlight unit where each of the light sources is associated with a respective deformable lens; and
Figure 6b shows schematically a 2 dimensional measurement of the intensity of light output by a display device that employs the backlight unit of Figure 6a.
Figure 7 shows schematically a system for controlling a plurality of deformable lenses and the light output therefrom;

### Detailed Description

A display device is used to display an image, which may be a static and/or moving image. Some display devices use an arrangement of plural light sources for generating the displayed image. The light emitted by the light sources may be used directly to generate the displayed image. For example, a large billboard may use a large number of red, green and blue coloured LEDs to generate the displayed image. In other display devices, the light sources may be part of a backlight unit, and the backlight unit may be used to illuminate a number of pixels that are in front of the backlight unit. One type of display device that generates displayed images in this way is a liquid crystal display (LCD) device. (In the present disclosure, this will typically be referred to as an LCD display device, to clarify that it is the whole of the display device that is being referred to.)

LCD display devices comprise a backlight unit and a screen. The backlight unit has a number of light sources for illuminating the screen.

The screen of the LCD display device has a number of individually controllable elements for generating an image. These individually controllable elements correspond to the pixels of the image. It is also common to refer to the individual controllable elements of an LCD display device as pixels. The pixels receive the light that is emitted by the light sources of the backlight unit and output either red, green or blue light.

In the LCD display device, each pixel includes a liquid crystal cell. The alignment of the liquid crystals in the liquid crystal cell is controllable such that an amount of light that is able to pass through the pixel can be controlled. By controlling the amount of light that is able to pass through each pixel, a desired image can be generated for display.

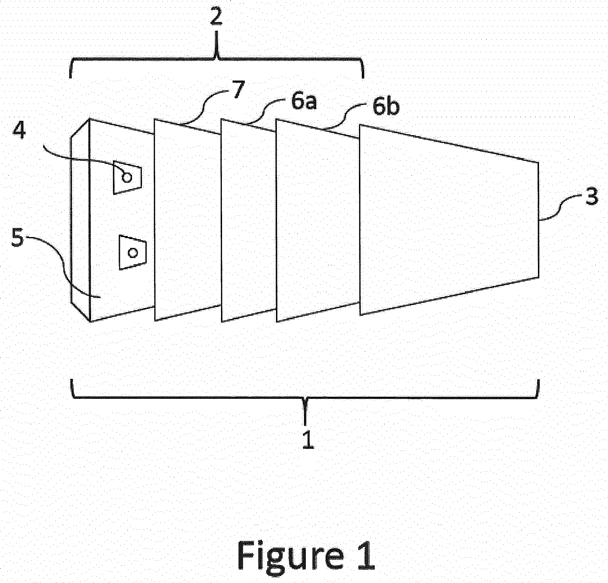

Figure 1 shows the structure of an example of an LCD display device. The LCD display device 1 comprises a backlight unit 2 and a LCD screen 3. As can be seen in Figure 1, the backlight unit 2 has a number of light sources 4 for emitting light. The light sources 4 are attached to a box-like container 5 of the backlight unit 2. The box-like container 5 may be made of metal. The interior of the box-like container 5 may be covered with a reflector sheet (not shown) so that as much of the light emitted by the light sources 4 is directed towards the LCD screen 3 of the display device 1. The box-like container 5 may be attached to a diffuser plate 7. A number of optical films 6a, 6b, may also be located between the plate 5 and the LCD screen 3 of the display device 1. The diffuser plate 7 and optical films 6a, 6b act so as to spread and collimate the light emitted by the light sources 4 of the backlight unit 2 over the screen 3. The light sources 4 may be for example light-emitting diodes (LEDs).

To ease the manufacture of the LCD display device 1, it is preferred that the light sources 4 of the backlight unit 2 are arranged in a regular two-dimensional array. However, in practice with known LCD display devices 1, such an arrangement of light sources does not allow an acceptable uniformity of light to be achieved by the display device 1. This is in part because of a variability in the light intensity that is output by the light sources 4 and also because of the point-like nature of the light sources 4. As light is emitted by a given light source 4, it is only able to spread over a small area before meeting the screen 3 of the LCD display device 1. As a result, different regions of the screen 3 will receive light from the same light source 4, but at different intensities. Furthermore, some regions of the screen 3 will receive light from a different number of light sources 4 than others. The effect of this is that an image being displayed at the LCD display device 1 may appear with dark corners, light leakages and hot spots.

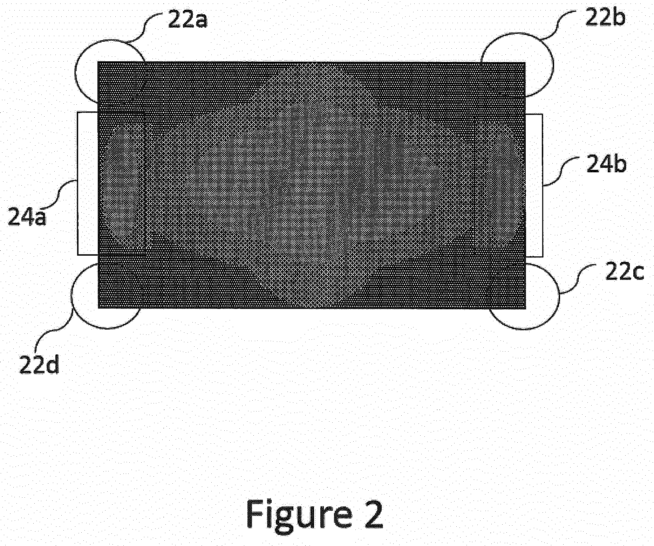

Figure 2 schematically shows an example of an LCD display device 1 with dark regions at corners 22a, 22b, 22c, 22d and light leakages at the left and right edges 24a, 24b. Individually or collectively, these problems cause the display device 1 to output light with a non-uniform distribution of intensity. The term uniformity of light is used herein to describe the distribution of the intensity of light that is output by the display device 1. Methods for measuring the uniformity of light that is output by a display device 1 are known in the art.

It is known in the art that the problem of a lack of uniformity of the light output by an LCD display device can be addressed by adjusting the arrangement of light sources in the backlight unit during design / manufacture until the light that is output by the display device is of an acceptable uniformity. The arrangement of the light sources in the backlight unit may need to be adjusted several times until an acceptable uniformity can be achieved. This can contribute significantly to the time and cost of designing and manufacturing the display device.

It is also known in the art that the uniformity of light output by the display device may be improved by fitting each of the light sources of the backlight unit with a respective lens, such as a polymethylmethacrylate (PMMA) lens. These lenses typically use total internal reflection to spread the light that is emitted by each light source over a larger area. This results in a more uniform distribution of light reaching the screen, and therefore being output from the LCD display device. However, there are still a number of problems associated with these lenses. For example, they are often limited in the angular distribution over which they are able to spread light. It is also tends to be difficult to reproduce new lens designs that spread the light over a defined area.

It would be desirable if a display device could be manufactured with a uniform light output, such that multiple different arrangements for the light sources do not need to be tested and adjusted during the research, design and development stage of the display device. Furthermore, it would be desirable if the angular distribution of light emitted by each light source in the backlight unit could be more finely and uniformly controlled, for example, by individually controlling the direction of light that is emitted by each of the individual light sources in the light source arrangement.

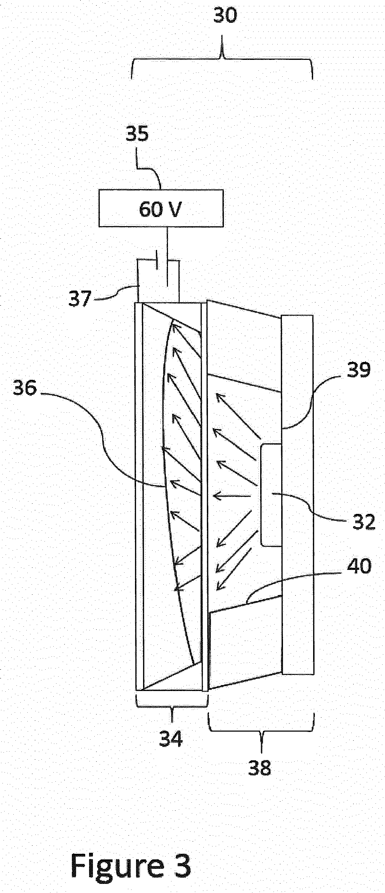

Referring now initially to Figure 3, there is shown an example of a light source-lens combination 30 for controlling a direction of light emitted by the light source 32 in accordance with the present disclosure.

As can be seen in Figure 3, the light source-lens combination 30 comprises a light source 32 and a lens module 34. The lens module 34 comprises a deformable lens 36. The lens 36 is controllably deformable so as to have a controllable shape. The shape of the lens 36 may be controlled so as to control a direction of light that is output by the lens 36. Controlling the direction of light that is output by the lens 36 may include controlling the angular distribution and/or spread of light that is output by the lens 36. Here, the term angular distribution refers to an angular range in three-dimensional space over which the light emitted by the light source 32 is distributed. Generally, light that is distributed over a larger angular range is said to subtend a larger solid angle than light that is distributed over a smaller angular range.

The light source 32 shown in Figure 3 corresponds to one of the plurality of light sources that make up the light source arrangement of the display device 1. In some examples, the light source arrangement is used in a backlight unit 2 of an LCD display device 1.

As can be seen in Figure 3, the light source 32 is held within a package 38. The package 38 comprises a base 39 to which the light source 32 is attached and a number of sides or surfaces 40 for guiding the light emitted by the light source 32 out of the package 38.

The light source 32 may comprise a light emitting diode (LED). The light source 32 may comprise a blue LED that is coated in phosphor so that white light is generated by the phosphor. The LED package 38 and lens module 34 may be positioned such that an air interface exists between them.

The deformable lens 36 may be associated with at least one electrode 37 for controlling the deformation of the deformable lens 36. For example, two opposing surfaces of the lens module 34 may each be associated with a respective electrode 37. The at least one electrode 37 may be separated from the deformable lens 36 by an insulating layer, such as an air gap or a layer of hydrophobic liquid (not shown). The at least one electrode 37 is connected to a power source 35.

The shape of the deformable lens 36 may be controlled by controlling a voltage that is applied to the at least one electrode 37 so as to modify the electric field across the deformable lens 36. The relationship between the voltage that is applied to the at least one electrode 37 and the shape of the deformable lens 36 may be known in advance, and this relationship may be used to control the shape of the deformable lens 36. The shape of the lens 36 determines the manner in which light is refracted by the lens 36. Hence, by controlling the voltage that is applied to the at least one electrode 37, and therefore the shape of the lens 36, the direction of light output by the lens 36 can be controlled.

When a voltage is not being applied to the at least one electrode 37, the deformable lens 36 may revert to a rest state. The rest state may be associated with a default shape to which the deformable lens 36 always reverts when it is in the rest state. As can be seen in Figure 3, a voltage is applied to the at least one electrode 37 via a power source 35. A 60V power source 35 may be appropriate for applying the voltage to the at least one electrode 37.

In some embodiments, the deformable lens 36 may be associated with a plurality of electrodes 37, located at or around different portions of the lens 36 (e.g. to the sides as well as the top and bottom of the lens 36 in the orientation shown in the Figures). For example, each side of the lens module 34 may be associated with one or more respective electrodes 37. In some embodiments, there may be a discrete array of electrodes 37 located at one or more sides of the lens module 34. The use of multiple electrodes allows for finer control over the shape of the lens 36. This is because the voltage that is applied to each electrode 37 can be individually controlled, therefore allowing different regions of the deformable lens 36 to be subject to electric fields of different strength. By controlling a voltage that is applied to each electrode 37, the shape of the deformable lens 36 can be more finely tuned, thereby allowing greater control over the direction of light that is output by the deformable lens 36.

The deformable lens 36 may comprise a liquid for refracting the light emitted by the light source 32. In alternative embodiments, the deformable lens 36 may comprise a gel. In preferred embodiments, the deformable lens 36 comprises a liquid in the form of an electrolyte solution such as potassium chloride or sodium chloride.

The initial shape of the lens 36 may be such that the direction of the light emitted by the light source 32 remains relatively unchanged. When a voltage is applied to the at least one electrode 37 or an existing voltage applied to the at least one electrode 37 is varied, the shape of the deformable lens 36 may change accordingly. As just one specific example shown in Figure 3, the shape of the deformable lens 36 may be changed such that it takes a generally semi tear-drop shape. As another example, the shape of the deformable lens 36 may be changed such that it takes a shape that is a more symmetrical convex or concave shape.

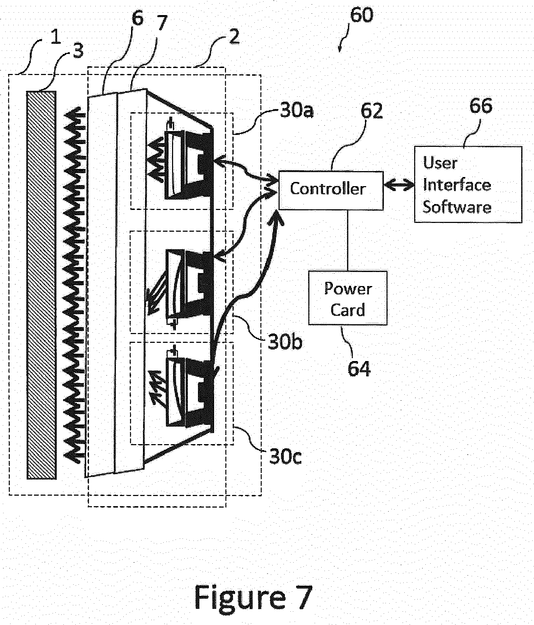

Preferably, the voltage that is applied to the at least one electrode 37 is controlled by a controller (discussed further below). The controller is able to control the voltage that is applied to the electrode(s) associated with each deformable lens 36, thereby allowing the direction of light that is output by each light source 32 to be controlled individually. An example of this individual control over the deformable lenses 36 is shown schematically in Figure 7. Figure 7 shows first, second and third light source-lens combinations 30a, 30b, 30c for which light is controlled to be output in different respective directions.

In some examples, at least one of the light sources 32 is associated with a respective deformable lens 36. In other examples, a majority of the light sources 32 are associated with a respective deformable lens 36. In yet other examples, each of the plurality of light sources is associated with a respective deformable lens 36.

A method of manufacturing a display device 1 that employs one or more of the light source-lens combinations 30 described above will now be described.

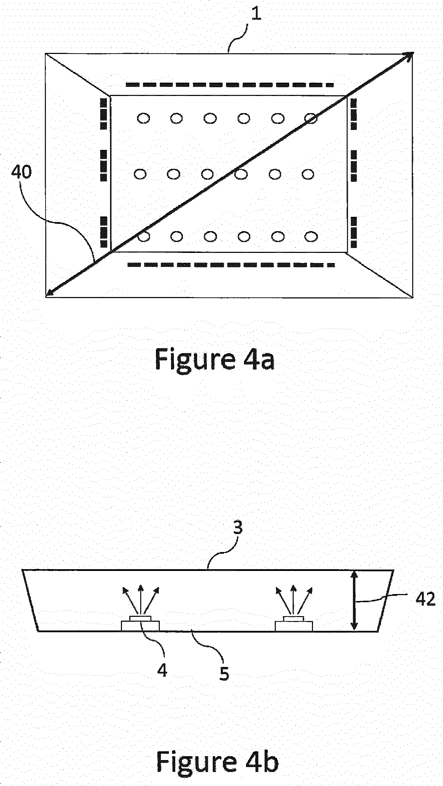

Initially, the number of light sources 32 that are to be used in the light source arrangement is determined. This number may be calculated in the conventional manner, i.e. based on for example the size 40, thickness 42 and luminance requirements of the display device 1. The notions of size 40 and thickness 42 of a display device 1 are shown schematically in the rear and longitudinal cross-sectional views shown in Figures 4a and 4b. The size of the display device 1 refers to the length along the diagonal between two opposing corners of a rear surface of the display device 1. This is indicated at 40 in Figure 4a. The thickness of the display device 1 refers to the distance between a rear surface and a front surface of the display device 1. This is indicated at 42 in Figure 4. For example, the thickness of an LCD display device 1 provides an indication of the distance between the box-like container 5 and the screen 3.

Generally, the thickness 42 of an LCD display device 1 is related to the uniformity of light that reaches the screen 3. This is because the distance between the box-like container 5 and the screen 3 determines the area over which the light emitted by each light source 4 is able to spread before reaching the screen 3. Light from an individual light source 4, as well as light from multiple light sources, will appear more uniform if the light has been able to spread over a larger area before reaching the screen 3. This is because any variations in intensity will also have been spread over a larger area and will therefore appear less pronounced. Due to current trends in the market, manufacturers of LCD display devices are striving for ever thinner LCD display devices. As a result, it is becoming increasingly difficult to produce LCD display devices that output light at an acceptable uniformity.

Once the number of light sources 32 to be used in the light source arrangement has been determined, the corresponding number of light sources 32 may be attached to a box-like container 5 of the display device 1. The light sources 32 may be arranged in a regular array such that they are uniformly distributed across the box-like container 5.

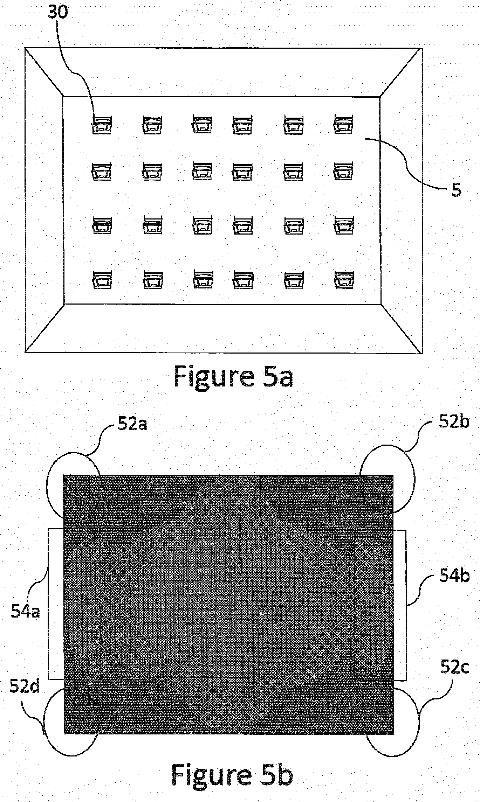

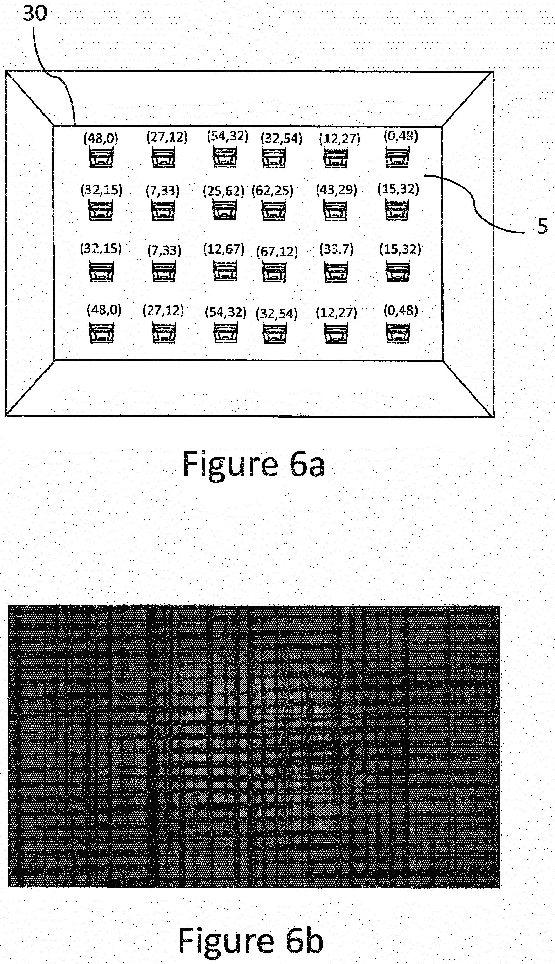

Figures 5a and 6a show an example of an embodiment in which the light sources 32 are arranged in a regular array, and are each associated with a respective deformable lens 36. To assist explanation, this example of an embodiment will be used to describe the process for manufacturing a display device 1 according to the present disclosure. The deformable lenses 36 operate in accordance with the examples described in relation to Figure 3.

In a first stage of the manufacturing process, power is supplied to each of the light sources 32, and no voltage is applied to any of the electrodes 37 associated with the deformable lenses 36. A 2D measurement of the uniformity of light output by the display device 1 is then measured. An example 2D measurement of the intensity of light that is output by the display device 1 is shown in Figure 5b. As can be seen in Figure 5b, the intensity of light output by the display device 1 has a non-uniform distribution. This is visible in the form dark regions at the corners 52a, 52b, 52c, 52d and light leakages 54a, 54b at two opposed edges.

Based on the measured uniformity of light output by the display device 1, one or more of the deformable lenses 36 may be selected for control. This may involve, for example, identifying which of the deformable lenses 36 are able to influence the areas of the display device 1 that are associated with the non-uniform light output, and selecting those deformable lenses 36 for control.

In a second stage of the manufacturing process, a voltage is applied to the electrode(s) 37 of the one or more deformable lenses 36 that have been selected for control. The voltage that is applied to electrode(s) 37 may depend on the measured uniformity. As described earlier, the applied voltage enables the shape, and therefore direction of light that is output by a deformable lens 36 to be controlled. Hence, the voltage that is applied to each of the selected deformable lenses 36 (not necessarily the same voltage for each selected lens 36) lens 36 will depend on how the light emitted by the associated light sources 32 needs to be re-distributed (since the angular distribution and/or spread of light output by the lens 36 may be controlled by controlling the direction of light output by the lens 36).

For example, if the light output by the display device 1 appears to be darker at the corners, the deformable lenses 36 associated with light sources 32 more towards the centre of the back plate (though still in the general vicinity of the corner concerned) may be controlled so as to redirect some of the light towards the corners of the screen 3. Similarly, if light leakage is detected at the edges of the display device 1, the deformable lenses 36 at the rightmost and leftmost edges of the box-like container 5 may be controlled so that that a greater portion of light is directed away from the corresponding edges of the screen 3.

With a voltage applied to one or more of the electrodes 37 associated with the one or more selected deformable lenses 36, the intensity of light output by the display device 1 is then measured a second time, and the uniformity determined.

As can be seen in Figure 6b, the light output by the display device 1 is more uniformly distributed across the display device 1 than when a voltage was not being supplied to any of the electrodes 37 associated with the deformable lenses 36 (as shown in Figure 5b). The voltage that is applied to the one or more electrodes 37 can be adjusted until a desired uniformity is achieved. As described earlier, the voltage that is applied to each electrode 37 can be controlled individually.

It should be noted that in alternative embodiments, a voltage may be applied to the electrodes 37 associated with the deformable lenses 36 in the first stage. This voltage may be such that the direction of light output by the deformable lenses 36 remains relatively unchanged. In the second stage, the voltage applied to one or more deformable lenses 36 (e.g. the lenses that have been identified for control) may be varied, such that the direction of light that is output by those lenses 36 causes an increase in the uniformity of light that is output by the display device 1.

During the first and second stages of the manufacturing process, the light sources 32 of the light source arrangement remain in their original positions (i.e. in the regular array). In practice, the positions of the light sources 32 do not need to change between each measurement of uniformity, and indeed do not need to be changed in order to achieve the desired uniformity.

A system 60 that enables user control of a plurality of deformable lenses 36 and the light output therefrom is shown schematically in Figure 7. The user may be, for example, a design technician (i.e. at the manufacturing stage), or a consumer (i.e. end user). As can be seen in Figure 7, the system comprises a controller 62, which is connected to a power card 64 and a user interface software module 66. The controller 62 receives power from power card 64 and, optionally, user input from user interface software module 66.

The controller 62 is electrically connected to each of the deformable lenses 36 of the light source arrangement that is installed in the backlight unit 2 of the display device 1. The controller 62 is responsible for controlling the voltage that is applied to the electrodes 37 associated with the deformable lenses 36. By controlling the voltage that is applied to the one or more electrodes 37 associated with each deformable lens 36, the controller 62 is able to re-distribute the light emitted by each individual light source 32.

The system 60 may allow a number of deformable lenses 36 to be selected for control based on a user input that is received at the user interface software module 66. For example, a user may provide an indication of a location or region at the display device 1 for which the non-uniformity of light is most visible (e.g. the corners or the edges of the display). The user may also provide an indication as to whether the intensity of light reaching that location or region should be increased or decreased. The user may provide these indications by interacting with a user interface that is displayed at the display device 1 (not shown), or at a separate device that is able to interact with the display device 1.

The user interface software module 66 passes on the received user inputs to the controller 62. Based on the received user inputs, the controller 62 determines which of the deformable lenses 36 are to be selected for control, and a voltage that is to be applied to the at least one electrode 37 associated therewith. The voltage(s) are then applied to the one or more electrodes 37 of the selected deformable lenses 36. In this way, the user is able to cause the light emitted by certain light sources to be redirected so as to achieve an overall desired uniformity of light that is output by the display device 1.

In an alternative example of the above-described embodiment, the controller 62 may determine the deformable lenses 36 that are to be controlled without receiving user input. For example, the controller 62 may receive an indication of a measurement of the uniformity of light output by the display device 1 and use this to determine which of the deformable lenses 36 are to be selected for control, and the direction of light that is to be output by the deformable lenses 36 that are selected. The controller 62 may be pre-programmed with a mapping between the locations of the light sources 32 (and therefore deformable lenses) and regions of the screen 3 of the display device 1, and may use this to determine which of the deformable lenses 36 are to be controlled, and the manner of that control. The controller 62 may be configured to receive multiple measurements of uniformity and to continually adjust the deformation of one or more deformable lenses 36 until a subsequent measurement of uniformity is within an acceptable range of a desired uniformity.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A light source arrangement for a display screen, the arrangement comprising:
a plurality of light sources (4) for emitting light;
at least one of the light sources (4) being associated with a lens (6), the lens (6) being arranged to receive light emitted by the light source (4) with which it is associated;
the lens (6) being a deformable lens (36), the deformable lens (36) being controllable such that the direction of the light output by the lens (36) can be controlled by controlling deformation of the deformable lens (36).

2. A light source arrangement according to claim 1, comprising an electrode (37) associated with the lens (36), the electrode (37) being operable to control the deformation of the deformable lens (36).

3. A light source arrangement according to claim 2, wherein the light source arrangement comprises a controller (62), the controller (62) being operable to control a voltage that is applied to the at least one electrode (37) to control the deformation of the deformable lens (36).

4. A light source arrangement according to any of claims 1 to 3, wherein the deformable lens (36) comprises a liquid for refracting the light emitted by the light source (4) with which it is associated.

5. A light source arrangement according to claim 4, wherein the liquid comprises an electrolyte solution.

6. A light source arrangement according to any of claims 1 to 5, wherein plural light sources (4) are associated with respective deformable lenses (36).

7. A light source arrangement according to claims 1 to 6, wherein each light source (4) comprises a light-emitting diode LED.

8. A light source arrangement according to claims 1 to 7, wherein the lens (36) is associated with plural electrodes (37).

9. A display device (1) comprising:
a screen (3), the screen (3) comprising a plurality of individually controllable elements for generating an image, each element being selectively operable to allow light to pass through it and to block light passing through it; and
a backlight unit (2) for illuminating the plurality of individually controllable elements, the backlight unit (2) comprising a light source arrangement according to any of claims 1 to 8.

10. A display device (1) according to claim 9, wherein the display device (1) is a liquid crystal display LCD device, and each of the individually controllable elements comprise a liquid crystal cell.

11. A method of manufacturing a display device (1), the method comprising:
installing a plurality of light sources (4) in the display device (1), at least some of the light sources (4) being associated with a respective deformable lens (6);
causing the plurality of light sources (4) to emit light;
measuring a uniformity of light output by the display device (1); and
based on the measured uniformity, controlling a deformation of one or more of the deformable lenses (36) to improve the uniformity of light output by the display device (1), wherein the deformation allows the direction of light output by the one or more deformable lenses (36) to be controlled.

12. A method according to claim 11, comprising, after controlling the deformation of the one or more deformable lenses (36), measuring the subsequent uniformity of light that is output by the display device (1) and determining whether the subsequent uniformity is within a desired range of uniformity.

13. A method according to claim 11 or claim 12, wherein each deformable lens (36) is associated with one or more respective electrodes (37) and controlling the deformation of the one or more deformable lenses (36) comprises controlling a voltage that is applied to the one or more respective electrodes (6).

14. A method according to any of claims 11 to 13, wherein each deformable lens (36) comprises a liquid for refracting the light emitted by the light source (4) with which it is associated.

15. A method according to any of claims 12 to 14, comprising receiving a user input at a user interface, and controlling the deformation of the one or more deformable lenses (36) based on the received user input.
